# EUROPÄISCHE PATENTANMELDUNG

(11) **EP 1 000 815 A2**
(43) Veröffentlichungstag der Anmeldung: **17.05.2000**
(21) Anmeldenummer: 99115939.3
(22) Anmeldetag: 13.08.1999
(51) Int. Cl.: B60R 21/02, B60K 37/00

(54) **Rückhaltesystem für den Bediener eines Flurförderzeugs**

(30) Priorität: 09.11.1998 DE 19851447
(71) Anmelder: Jungheinrich Aktiengesellschaft, 22047 Hamburg (DE)
(72) Erfinder: Niebuhr, Michael, 22941 Bargteheide (DE)
(74) Vertreter: Patentanwälte Hauck, Graalfs, Wehnert, Döring, Siemons

(57) **Zusammenfassung**

Rückhaltesystem für den Bediener eines Flurförderzeugs, das einen Fahrersitz, einen Fußraum und einen Armaturenträger für Anzeige- und Bedienelemente im Abstand zum Fahrersitz aufweist, wobei der Armaturenträger als Konsole (28) ausgeführt ist, die um eine horizontale Achse (26) im Fußraum im Abstand zum Fahrersitz (16) schwenkbar gelagert und zwischen einer Betriebsposition und einer Freigabeposition verstellbar ist, die Konsole (28) an ihrer Unterseite so geformt ist, daß sie in der Betriebsposition die Oberschenkel und gegebenenfalls die Knie des Fahrers von oben und gegebenenfalls seitlich im Abstand umgibt, daß die Konsole am freien dem Fahrer zugekehrten Ende (32) den Hüftbereich des Fahrers im Abstand teilweise umgibt, wobei die Konsole in der Freigabeposition hochgeklappt ist und durch einen Abstand ihrer Unterseite vom Fahrersitz ein Ein- und Aussteigen des Fahrers ermöglicht und daß eine lösbare Verriegelungsvorrichtung vorgesehen ist, die die Konsole in der Betriebsposition automatisch verriegelt.

## Beschreibung

Die Erfindung bezieht sich auf ein Rückhaltesystem für den Bediener eines Flurförderzeugs nach dem Oberbegriff des Patentanspruchs 1.

Rückhaltesysteme für mehr oder weniger schnell laufende Fahrzeuge sind in den verschiedensten Ausführungsformen bekannt geworden. Besonders verbreitet ist der Einsatz von Gurten in den unterschiedlichsten Ausgestaltungen. Aus DE 42 01 824 ist ein Insassenrückhaltesystem für Kraftfahrzeuge bekannt geworden, bei dem im Fußraum des Beifahrers bzw. für Insassen des Rücksitzes ein Aufprallelement vorgesehen ist, das quer zur Fahrzeuglängsachse schwenkbar ist. Vorzugsweise wird die Schwenkachse in eine oberhalb des Knies des Fahrgastes befindliche Ebene gelegt, wobei das Aufprallelement zu den Knien des Insassen hin schwenkbar ist. Das Aufprallelement kann gleichzeitig in Richtung zu dem zurückzuhaltenden Körperteil linear ausfahrbar sein.

Aus DE 34 05 921 ist ein Bedienungsplatz für Traktoren und Arbeitsmaschinen bekannt geworden, die eine um mindestens 180° schwenkbare, auf einem Drehkranz ruhende und über Führungselemente in der vertikalen Längsebene längen- und höhenverstellbare Konsole aufweist, an deren einem Ende ein verstellbarer Sitz mit griffbereit liegenden Bedienelementen angeordnet ist und an deren anderem Ende eine eine Lenkeinrichtung, Anzeige- und Bedienelemente aufweisende Bedieneinheit kippbar festgelegt ist. Die Führungselemente bestehen aus mindestens einer etwa halbkreisförmig angeordneten Führungsbahn, durch die der Konsole bei einem Verstellvorgang eine Schwenkbewegung erteilt wird. Zum Querneigungsausgleich ist die Konsole über eine Schwenkachse mit dem Drehkranz und einer mit diesem in Verbindung stehenden Plattform verbunden. Die Schwenkachse fällt mit einer Gelenkstelle der Lenkwelle zusammen. Sinn eines derartigen Bedienungsplatzes ist, ihn so veränderbar zu gestalten, daß eine leichte Anpaßbarkeit auch während des Fahrbetriebes an die unterschiedlichen Arbeitsbedingungen auf einfache Weise möglich und ein ermüdungsfreies Arbeiten über einen langen Zeitraum selbst bei Hanglagen gegeben ist.

Schließlich ist für Flurförderzeuge bekannt geworden, eine Rückhalteeinrichtung dadurch zu bilden, daß die Armlehnen um eine vertikale Achse schwenkbar ausgebildet und Abschnitte der Armlehnen vor den Körper bringbar sind.

Der Erfindung liegt die Aufgabe zugrunde, ein Rückhaltesystem für Flurförderzeuge zu schaffen, das die Bewegungsfreiheit des Bedieners nicht stark einschränkt und das vorzeitige Verlassen oder Herunterfallen des Bedieners bei einem Unfall verhindert.

Diese Aufgabe wird durch die Merkmale des Patentanspruchs 1 gelöst.

Wesentlich bei der Erfindung ist, daß der Armaturenträger, der als Konsole ausgebildet ist, gleichzeitig die Rückhaltevorrichtung bildet. Zu diesem Zweck ist die Konsole um eine horizontale im Fußraum liegende Achse im Abstand zum Fahrersitz schwenkbar gelagert und zwischen einer Betriebsposition und einer Freigabeposition verstellbar. In der Betriebsposition bildet die Konsole die Rückhaltevorrichtung, wobei eine lösbare Verriegelungsvorrichtung für die Konsole dafür sorgt, daß die Konsole in der Betriebsposition eine automatische Verriegelung erfährt. Der Armaturenträger bzw. die Konsole ist an der Unterseite so geformt, daß diese in der Betriebsposition die Oberschenkel und gegebenenfalls die Knie des Fahrers von oben und seitlich im Abstand umgibt. Die Konsole ist ferner am freien, dem Fahrer zugekehrten Ende im Hüft- bzw. Bauchbereich des Fahrers so ausgebildet, daß es den Fahrerkörper im Abstand teilweise umgibt. In der verriegelten Betriebsposition werden daher Knie und Beine des Fahrers sowie der untere Bereich des Fahrerrumpfes von Flächen der Konsole umgeben, welche bei einem Aufprall des Fahrzeugs dafür sorgen, daß entsprechende Körperteile an den zugekehrten Flächen aufprallen und somit abgefangen werden können.

In der Freigabeposition, d.h. in der hochgeklappten Stellung gibt die Konsole einen ausreichenden Abstand zum Fahrersitz frei, so daß der Fahrer bequem aus- und einsteigen kann. Trotz der beschriebenen Ausbildung als Rückhaltevorrichtung wird eine besonders ergonomisch günstige Anordnung von Anzeige- und Bedienelementen erhalten bei geringer Sichteinschränkung seitlich und nach vorn. Das sogenannte Anlegen der Rückhaltevorrichtung ist manipulationssicher und schränkt vor allen Dingen die Bewegungsfreiheit des Oberkörpers des Fahrers kaum ein. Auch für die Betätigung der Pedalen im Fußraum ist ausreichende Freiheit vorhanden. Bei einem Unfall verhindert die Rückhaltevorrichtung ein vorzeitiges Verlassen oder Herausfallen des Bedieners.

Nach Einnehmen der Sitzposition auf dem Gerät klappt der Bediener die Konsole zu sich heran. Sie rastet in der Betriebsposition ein, was durch geeignete Verriegelungsmittel bewirkt wird. Ein der Betriebsposition zugeordneter Schalter wird zugleich betätigt, um die Funktionen des Gerätes freizugeben, welche sonst gesperrt sind.

Die Betriebsposition ist so gewählt, daß die Unterseite der Konsole im Bereich der oberen Oberschenkel einen relativ dichten Abstand zum Bediener hat, im Bereich der Knie und der Unterschenkel jedoch ein etwas größerer Abstand vorgesehen werden kann, so daß die Bedienung der Pedalerie nicht behindert wird.

Die Konsole kann die Beine des Bedieners zumindest teilweise auch seitlich umfassen, wodurch ein Verlassen des Sitzes verhindert wird, andererseits die Bewegungsmöglichkeit des Oberkörpers weitgehend uneingeschränkt bleibt.

Die Unterseite der Konsole und die dem Körper zugewandte Endkante ist mit weichem Material versehen, um beim Aufprall von Körperteilen Verletzungen zu vermeiden.

Durch die körpernahe Anordnung aller Anzeige- und Bedienelemente bestehen gute Sichtmöglichkeiten seitlich und nach vorn.

Zum Verlassen des Gerätes hat der Fahrer durch Betätigung eines geeigneten Betätigungselements die Verriegelungsvorrichtung zu lösen. Diese ist so ausgebildet, daß sie nur betätigt werden kann, wenn das Fahrzeug im Stillstand ist. Der Stillstand wird durch einen geeigneten Sensor erfaßt, der ein entsprechendes Signal auf die Betätigung für die Verriegelungsvorrichtung gibt.

Die oben beschriebenen einzelnen Merkmale, die Unteransprüchen entsprechen, sind optional und nicht als obligatorisch zur Erfindung gehörend anzusehen.

Nach einer weiteren Ausgestaltung der Erfindung kann mit dem Hoch- oder Vorklappen der Konsole eine Feststellbremse angezogen werden. Dadurch wird ein Wegrollen des Gerätes bei nicht besetztem Fahrerplatz ausgeschlossen.

Die Erfindung wird anhand eines in den Zeichnungen dargestellten Ausführungsbeispiels näher erläutert.
- Fig. 1: zeigt schematisch in Seitenansicht eine Rückhaltevorrichtung für ein Flurförderzeug.
- Fig. 2: zeigt eine ähnliche Darstellung wie Fig. 1, wobei die Rückhaltevorrichtung und der Fahrersitz im Schnitt angedeutet sind.

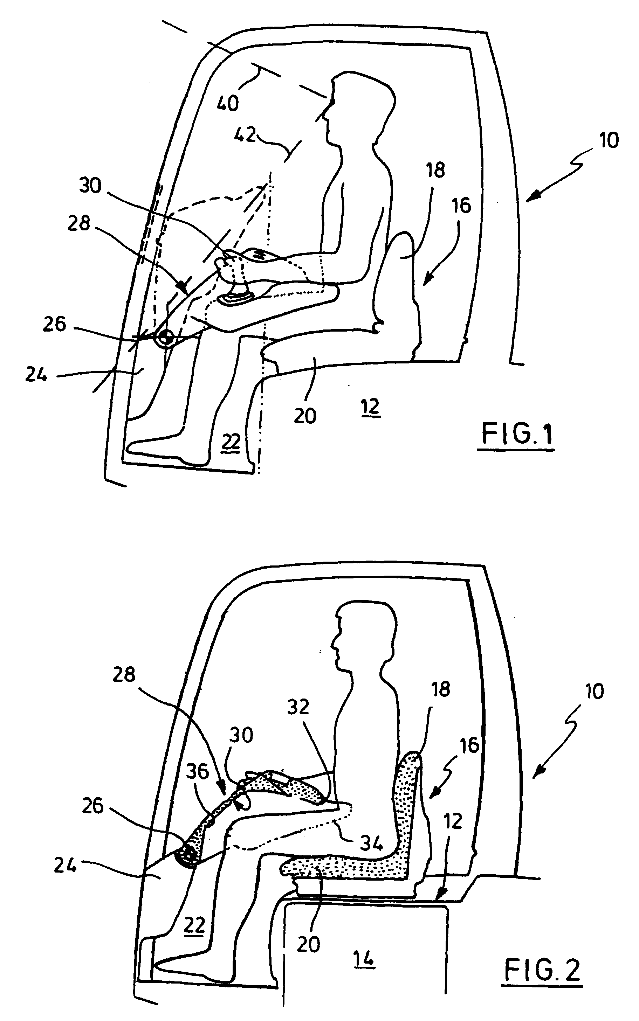

In den Figuren 1 und 2 ist lediglich eine Fahrerkabine 10 eines ansonsten nicht näher dargestellten Flurförderzeuges angedeutet. In der Fahrerkabine befindet sich ein Gehäuseabsatz 12, in dem eine in Fig. 2 bei 14 angedeutete Batterie zum Betrieb des Flurförderzeugs angeordnet ist. Die Zugangsmöglichkeit zur Batterie 14 ist im einzelnen nicht dargestellt. Sie besteht zumeist in dem Hochklappen einer Abdeckung oder Haube, welche den Absatz 12 nach oben abschließt. Auf dem Absatz ist ein Fahrersitz 16 mit Rückenlehne 18 und Sitzabschnitt 20 angeordnet. Vor dem Fahrersitz 16 bzw. dem Gehäuseabsatz 12 befindet sich ein Fußraum 22, in dem die Beine des in Fig. 1 und 2 dargestellten Fahrers plaziert sind. Der Fußraum wird nach vorn durch eine nicht weiter dargestellte Begrenzung abgeschlossen, die im oberen Bereich transparent ist, d.h. entweder eine transparente Scheibe aufweist oder einfach innerhalb des dargestellten Rahmens der Kabine 10 freigelassen ist.

An der vorderen Begrenzung des Fußraums 22 ist ein Lagerbauteil 24 befestigt, das über ein Lager 26 mit horizontaler Achse eine Konsole 28 schwenkbar lagert. Die Konsole 28 ist als Armaturenträger ausgebildet mit Anzeige- und Bedienelementen, welche für die Funktion des Fahrzeugs erforderlich bzw. geeignet sind. Von diesen ist lediglich ein Joystick bei 30 angedeutet.

Aus Fig. 1 ist zu erkennen, daß die Konsole zwischen zwei Endpositionen verstellbar ist. Die untere heruntergeklappte Endposition oder auch Betriebsposition ist mit durchgezogenen Linien gezeichnet, während die obere oder Freigabeposition gestrichelt dargestellt ist. In der letzteren Position kann der Fahrer frei den Sitz 16 einnehmen oder verlassen, indem er sich seitlich bewegt.

Wie aus der Zusammenschau aus den Fig. 1 und 2 zu erkennen, ist die Konsole 18 an der Unterseite haubenartig ausgebildet. Die insgesamt mit 30 bezeichnete Unterseite hat im Längsschnitt ein Profil, das dem Verlauf der Oberseite der Oberschenkel, der Knie und der oberen Unterschenkel angepaßt ist. Der Abstand zu den erwähnten Körperteilen ist derart, daß noch ausreichend Bewegungsfreiraum für die Beine des Fahrers besteht, um entsprechende Pedalerie des Fahrzeugs zu betätigen (nicht gezeigt). Das hintere dem Körper des Fahrers zugekehrte Ende 32 der Konsole ist konkav ausgebildet und umgibt in einer annähernd horizontalen Ebene mit entsprechendem Abstand den Hüftbereich des Fahrers. Die Unterseite 30 ist im übrigen so geformt, daß sie sich zu beiden Seiten seitlich der Beine des Fahrers nach unten erstreckt, wie durch die strichpunktierte Linie 34 in Fig. 2 angedeutet. Die Unterseite 30 der Konsole 18 ist mithin so geformt, daß bei einem Aufprall die entsprechenden Körperteile, wie vordere obere Unterschenkel, Knie, Oberseite der Oberschenkel sowie der Hüftbereich des Fahrers gegen zugeordnete Anschlagflächen der Unterseite 30 anschlagen und somit die ungewollte Bewegung des Fahrers begrenzen. Um Verletzungen zu vermeiden, ist die gesamte Unterseite 30 und auch die freie Rückseite 32 mit weichem Material versehen.

Die seitlichen, herunterhängenden Abschnitte der Unterseite 30 dienen dazu, ein Herausfallen des Fahrers zur Seite zu verhindern.

Wie zu erkennen, ist der Abstand der Rückseite 32 zu den entsprechenden Körperteilen des Fahrers etwas geringer als der übrige Abstand der Unterseite 30. Da in diesem Bereich eine größere Bewegungsfreiheit des Fahrers nicht gefordert ist, ist der geringe Abstand zu Rückhaltezwecken besonders vorteilhaft. Bei einem Vorrutschen des Fahrers mit den Knien dient ein parallel dazu verlaufender Flächenbereich 36 als geeignete Anschlagfläche.

Der Konsole 28 ist eine Verriegelungs- oder Arretiervorrichtung zugeordnet (nicht gezeigt), welche die Konsole 28 in der Betriebsposition automatisch verriegelt. Ein Anheben der Konsole 28 ist ohne Entriegelung daher nicht möglich. Erst dadurch ergibt sich die Rückhaltefunktion der Konsole 28, die gleichzeitig Armaturenträger ist. Im Armaturenbereich kann mithin ein Betätigungselement vorgesehen werden, um die Entriegelung aufzuheben. Die Verriegelung kann so ausgeführt sein, daß trotz Betätigung des Betätigungselements eine Entriegelung nicht zustande kommt, bis das Fahrzeug endgültig zum Stillstand gekommen ist. Ein entsprechender hier nicht gezeigter Sensor ermittelt den Stillstand des Fahrers und gibt ein entsprechendes Signal auf die Verriegelungsvorrichtung. Mit der Konsole 28 kann ferner eine nicht gezeigte Feststellbremse gekoppelt sein, welche beim Hochklappen der Konsole betätigt wird. Dadurch wird verhindert, daß das Fahrzeug ungewollt ins Rollen gerät, wenn sich der Fahrer nicht auf dem Platz befindet.

Aus den beiden Blicklinien 40, 42 in Fig. 1 ist ersichtlich, daß der Fahrer eine gute Sichtmöglichkeit seitlich und nach vorn hat. Ein seitliches Verlassen ist bei verriegelter Konsole 28 ebenso wenig möglich wie ein Aufstehen des Fahrers. Obwohl mithin die Konsole als Rückhaltemittel dient, ermöglicht die Anordnung eine ergonomische Betätigung der Bedienelemente und eine gute Sicht auf die Anzeigeelemente.

## Patentansprüche

1. Rückhaltesystem für den Bediener eines Flurförderzeugs, das einen Fahrersitz, einen Fußraum und einen Armaturenträger für Anzeige- und Bedienelemente im Abstand zum Fahrersitz aufweist, dadurch gekennzeichnet, daß der Armaturenträger als Konsole (28) ausgeführt ist, die um eine horizontale Achse (26) im Fußraum (22) im Abstand zum Fahrersitz (16) schwenkbar gelagert und zwischen einer Betriebsposition und einer Freigabeposition verstellbar ist, die Konsole (28) an ihrer Unterseite so geformt ist, daß sie in der Betriebsposition die Oberschenkel und gegebenenfalls die Knie des Fahrers von oben und gegebenenfalls seitlich im Abstand umgibt, daß die Konsole am freien dem Fahrer zugekehrten Ende (32) den Hüftbereich des Fahrers im Abstand teilweise umgibt, wobei die Konsole in der Freigabeposition hochgeklappt ist und durch einen Abstand ihrer Unterseite (30) vom Fahrersitz (16) ein Ein- und Aussteigen des Fahrers ermöglicht und daß eine lösbare Verriegelungsvorrichtung vorgesehen ist, die die Konsole (28) in der Betriebsposition automatisch verriegelt.

2. Rückhaltevorrichtung nach Anspruch 1, dadurch gekennzeichnet, daß der Betriebsposition ein Schalter zugeordnet ist für die Freigabe der Funktionen der Anzeige- und Bedienelemente, wenn die Konsole (28) die Betriebsposition erreicht hat.

3. Rückhaltevorrichtung nach Anspruch 1 oder 2, dadurch gekennzeichnet, daß die Unterseite eine Knieanschlagfläche (36) aufweist, die sich in der Betriebsposition im Abstand zur Vorderseite des Knie des Fahrers erstreckt.

4. Rückhaltevorrichtung nach einem der Ansprüche 1 bis 3, dadurch gekennzeichnet, daß der Abstand der Knie von der Unterseite (30) der Konsole (28) größer ist als der von der Oberseite der Oberschenkel.

5. Rückhaltevorrichtung nach einem der Ansprüche 1 bis 4, dadurch gekennzeichnet, daß die Unterseite (30) der Konsole (28) im Schnitt annähernd dem Verlauf von Ober- und oberen Unterschenkeln und der Knie in der Sitzposition des Fahrers angenähert ist.

6. Rückhaltevorrichtung nach Anspruch 5, dadurch gekennzeichnet, daß der Abstand des freien Endes (32) der Konsole von den oberen Oberschenkeln relativ gering ist und kleiner als der Abstand in den restlichen Bereichen.

7. Rückhaltevorrichtung nach einem der Ansprüche 1 bis 6, dadurch gekennzeichnet, daß die Unterseite und/oder das hintere Ende der Konsole (28) mit weichem Material bekleidet ist.

8. Rückhaltevorrichtung nach einem der Ansprüche 1 bis 7, dadurch gekennzeichnet, daß ein Betätigungselement für die Entriegelung der Verriegelungsvorrichtung vorgesehen ist und die Entriegelung bei Betätigung des Betätigungselements nur freigegeben wird, wenn das Fahrzeug im Stillstand ist.

9. Rückhaltevorrichtung nach einem der Ansprüche 1 bis 8, dadurch gekennzeichnet, daß eine Feststellbremse des Flurförderzeugs beim Hochklappen der Konsole (28) betätigt wird.
